# EUROPEAN PATENT APPLICATION

(11) **EP 4 804 293 A1**
(43) Date of publication of application: **09.09.2026**
(21) Application number: 25732666.0
(22) Date of filing: 23.01.2025
(51) Int. Cl.: H01M 10/613, H01M 10/647, H01M 10/6555, H01M 10/6556, H01M 50/211

(54) **BATTERY APPARATUS AND ELECTRIC DEVICE**

(71) Applicant: Contemporary Amperex Technology (Hong Kong) Limited, Central, Hong Kong (HK)
(72) Inventor: QIAN, Ou, Ningde, Fujian 352100 (CN); LI, Yao, Ningde, Fujian 352100 (CN); ZHENG, Linxin, Ningde, Fujian 352100 (CN)
(74) Representative: Gong, Jinping
(86) International application number: PCT/CN2025/074354
(87) International publication number: WO 2026/156613

(57) **Abstract**

A battery apparatus (100) and an electric device are provided. The battery apparatus (100) includes a plurality of pouch cells (10) and a heat dissipation member (20). The plurality of pouch cells (10) are arranged along a first direction, and the heat dissipation member (20) is disposed between two adjacent pouch cells (10).

## Description

### TECHNICAL FIELD

This application relates to the field of battery technologies, and specifically to a battery apparatus and an electric device.

### BACKGROUND

In the related art, batteries are widely used in many fields such as electric transportation tools including electric bicycles, electric motorcycles, and electric cars, as well as military equipment and aerospace. Batteries can be roughly classified into pouch batteries and hard-shell batteries according to the hardness of their shells. Pouch batteries have the advantages of a relatively large mass/volume energy density and good safety, which makes their applications increasingly widespread. During the charge and discharge states of a pouch battery, the pouch battery inevitably generates heat. If the temperature of the pouch battery is high, the working performance of the pouch battery will be affected. Therefore, how to reduce the temperature rise of pouch batteries has become a technical problem to be solved.

### SUMMARY

This application provides a battery apparatus and an electric device, which can reduce the temperature rise of pouch batteries.

The battery apparatus of an embodiment of this application includes a plurality of pouch cells and a heat dissipation member. The plurality of pouch cells are arranged along a first direction; and the heat dissipation member is disposed between two adjacent pouch cells.

In the battery apparatus of the foregoing embodiment, the heat dissipation member is disposed between two adjacent pouch cells. The heat dissipation member can quickly transfer and dissipate the heat of the pouch cells to the surrounding environment, thereby reducing the temperature rise of the pouch cells and improving the working performance of the pouch cells.

In some embodiments of this application, the pouch cell includes a first outer surface, where the first outer surface is a largest surface of the pouch cell, the first outer surfaces of the plurality of pouch cells are arranged along the first direction, and the heat dissipation member is disposed between the first outer surfaces of two adjacent pouch cells.

In the foregoing technical solution, since the first outer surface is a largest surface of the pouch cell, the heat dissipation member is disposed between the first outer surfaces of two adjacent pouch cells, which makes the heat transfer efficiency between the heat dissipation member and the pouch cell higher and can reduce the temperature rise of the pouch battery more quickly.

In some embodiments of this application, a projection of the heat dissipation member in the first direction falls within the first outer surface of the pouch cell.

In the foregoing technical solution, a size of the heat dissipation member is smaller than a size of the pouch cell. Under the condition that the heat dissipation member meets the requirement of heat transfer, the heat dissipation member occupies a relatively small space of the battery apparatus, which increases the energy density of the battery apparatus.

In some embodiments of this application, a surface of the heat dissipation member facing the pouch cell is a plane.

In the foregoing technical solution, the surface of the heat dissipation member facing the pouch cell is a plane, so that when the heat dissipation member is in contact with the pouch battery, a contact area between the heat dissipation member and the pouch battery can be increased, and the heat transfer efficiency between the heat dissipation member and the pouch battery can be improved.

In some embodiments of this application, the heat dissipation member is spaced apart from the pouch cell.

In the foregoing technical solution, since the pouch cell inevitably undergoes swelling deformation during use, the heat dissipation member is spaced apart from the pouch cell, which can provide a certain space for the swelling deformation of the pouch cell, reduce the stress of the pouch cell, and improve the working performance of the pouch cell.

In some embodiments of this application, the heat dissipation member is a solid structure.

In the foregoing technical solution, the solid heat dissipation member has a high heat conduction efficiency, which can improve the efficiency of the heat dissipation member in transferring heat to the surrounding environment.

In some embodiments of this application, the heat dissipation member is a plate-shaped member with uniform thickness, and a thickness direction of the heat dissipation member is the same as the first direction.

In the foregoing technical solution, the plate-shaped heat dissipation member with uniform thickness makes the heat conduction efficiency at all positions of the heat dissipation member approximately the same, which can improve the consistency of heat transfer of the heat dissipation member.

In some embodiments of this application, the heat dissipation member is a metal member.

In the foregoing technical solution, the heat dissipation member made of metal has good thermal conductivity, which can improve the thermal conductivity efficiency of the heat dissipation member. In addition, the heat dissipation member has high strength, and can support the pouch cell when the pouch cell is impacted, which reduces the degree of deformation of the pouch cell, and improves the stability of the pouch cell during use.

In some embodiments of this application, a thickness of the heat dissipation member is D1, where 0.2 mm ≤D1≤2 mm.

In the foregoing technical solution, when the thickness of the heat dissipation member falls within the foregoing range, the heat dissipation member is easy to be manufactured, the volume of the heat dissipation member is appropriate, the space occupied by the heat dissipation member is relatively small, which can increase the energy density of the battery apparatus and provide high thermal conductivity.

In some embodiments of this application, the battery apparatus includes a support member, where the support member is disposed at an edge of the heat dissipation member, and the support member is abutted against the pouch cell.

In the foregoing technical solution, the support member can provide support for the pouch cell and improve the position stability of the pouch cell.

In some embodiments of this application, the support member surrounds the heat dissipation member.

In the foregoing technical solution, the support member can limit the position of the heat dissipation member, so as to improve the position stability of the heat dissipation member and thus improve the heat dissipation effect of the heat dissipation member on the pouch cell. In addition, the support member has more abutment positions with the pouch cell, which improves the supporting effect of the support member on the pouch cell.

In some embodiments of this application, the pouch cell includes a first outer surface, where the first outer surface is the largest surface of the pouch cell, the first outer surfaces of the pouch cells are arranged along the first direction, the heat dissipation member is disposed between the first outer surfaces of two adjacent pouch cells, and an outer contour area of the support member is less than an area of the first outer surface of the pouch cell.

In the foregoing technical solution, the outer contour area of the support member is less than the area of the first outer surface of the pouch cell. Under the condition that the support member can support the pouch cell, the support member occupies a relatively small space of the battery apparatus, which increases the energy density of the battery apparatus.

In some embodiments of this application, the support member is bonded to a side surface of the heat dissipation member.

In the foregoing technical solution, the support member is bonded to the side surface of the heat dissipation member, which not only enables the support member and the heat dissipation member to form an integral structure, facilitates reducing the number of components during the assembly process of the battery apparatus, and improves the assembly efficiency of the battery apparatus, but also enables the heat dissipation member to maintain a stable position under the connection of the support member, and improves the heat dissipation effect of the heat dissipation member on the pouch cell.

In some embodiments of this application, along the first direction, a thickness of the support member is greater than a thickness of the heat dissipation member.

In the foregoing technical solution, the support member allows at least one side of the heat dissipation member to be spaced apart from the corresponding pouch cell, providing space for the swelling deformation of the pouch cell.

In some embodiments of this application, along the first direction, a ratio of the support member to the pouch cell in thickness is lower than 10%.

In the foregoing technical solution, the ratio of the support member to the pouch cell in thickness is relatively small. In other words, the space occupied by the support member is small, and the space occupied by the pouch cell is large, which can increase the energy density of the battery apparatus.

In some embodiments of this application, the support member is made of polypropylene-based material.

In the foregoing technical solution, the support member has good insulation performance, which can improve the stability of the battery apparatus. In addition, the support member has relatively stable chemical properties, which can extend the service life of the battery apparatus.

In some embodiments of this application, the support member is a deformable elastic member.

In the foregoing technical solution, the support member may deform, which can reduce the stress on the pouch cell during the swelling deformation process of the pouch cell, thereby improving the stability of the pouch cell.

In some embodiments of this application, the battery apparatus includes a water cooling plate, where the pouch cell is thermally connected to the water cooling plate.

In the foregoing technical solution, the water cooling plate can cool the pouch cell and reduce the temperature rise of the pouch cell.

In some embodiments of this application, the pouch cell is supported on the water cooling plate along a second direction, where the first direction intersects with the second direction.

In the foregoing technical solution, the pouch cell leans against on the water cooling plate, making a distance between the pouch cell and the water cooling plate closer, which can improve the heat exchange efficiency between the pouch cell and the water cooling plate, thereby quickly reducing the temperature rise of the pouch cell.

In some embodiments of this application, a heat conducting member is disposed between the water cooling plate and the pouch cell, and the heat conducting member connects the pouch cell and the water cooling plate.

In the foregoing technical solution, the heat conducting member can improve the heat exchange efficiency between the water cooling plate and the pouch cell, facilitating the cooling of the pouch cell by the water cooling plate.

In some embodiments of this application, optionally, the pouch cell is any one of a lithium iron phosphate battery cell, a ternary battery cell, and a solid-state battery cell.

In the foregoing technical solution, using the above-mentioned types of pouch cells can provide more options for the design of the battery apparatus to meet different usage requirements. The pouch cell being a lithium iron phosphate battery single cell has advantages of high reliability, long cycle life, light weight, large capacity, and low internal resistance. The pouch cell being a ternary battery cell has advantages of high energy density and good electrochemical performance. The pouch cell being a solid-state battery cell has advantages of high energy density, high reliability, light weight, and good performance in high and low temperatures.

In some embodiments of this application, optionally, the pouch cell is a lithium iron phosphate battery cell, and in a positive electrode material of the pouch cell, a ratio of a positive electrode active material, a binder, and a conductive agent is 96:(1-3):(1-3); and/or the pouch cell is a ternary battery cell, and in a positive electrode material of the pouch cell, a ratio of a positive electrode active material, a binder, and a conductive agent is 96:(2-3):(1-2).

In the foregoing technical solution, when the pouch cell is a lithium iron phosphate battery cell, a high proportion of the positive electrode active material means that more substances capable of undergoing an electrochemical reaction can be accommodated within a limited electrode assembly. This is conducive to increasing the capacity and energy density of the battery apparatus, enabling the lithium iron phosphate battery cell to output a higher amount of electricity when its volume and weight are relatively small, and meeting the application scenarios with certain requirements for energy density. Using the above-mentioned ranges for the amounts of the binder and the conductive agent can reduce the cost of auxiliary materials, thereby reducing the overall cost of the battery apparatus. When the pouch cell is a ternary battery cell, due to the relatively complex structure and surface properties of the ternary material itself, using the positive electrode active material, binder, and conductive agent in the above-mentioned dosage ratios is conducive to ensuring good adhesion between the positive electrode active material particles and between the active material and the current collector. This improves the mechanical stability and integrity of the electrode assembly, and helps to reduce the risk of active material shedding and electrode pulverization during charge and discharge, and prolong the cycle life of the battery apparatus.

An electric device is provided, where the electric device includes the battery apparatus according to any of the foregoing embodiments.

The foregoing description is merely an overview of the technical solution of this application. For a better understanding of the technical means in this application so that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same components are denoted by same reference signs. In the accompanying drawings:
FIG. 1 is a schematic structural diagram of a vehicle according to some embodiments of this application;
FIG. 2 is a schematic three-dimensional exploded view of a battery apparatus according to some embodiments of this application;
FIG. 3 is a first schematic diagram of a portion of a battery apparatus according to some embodiments of this application;
FIG. 4 is a second schematic diagram of a portion of a battery apparatus according to some embodiments of this application;
FIG. 5 is a schematic exploded view of a portion of a battery apparatus according to some embodiments of this application; and
FIG. 6 is a schematic structural diagram of a portion of a battery apparatus according to some embodiments of this application.

### Reference signs are described as follows:

100: battery apparatus; 110: box; 10: pouch cell; 11: first outer surface; 12: second outer surface; 20: heat dissipation member; 21: side surface; 30: support member; 40: water cooling plate; 50: heat conducting member; 1000: vehicle; 200: controller; and 300: motor.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

The term "a plurality of" used in this application refers to more than two (including two).

In the embodiments of this application, unless otherwise stated, all the embodiments and optional embodiments of this application can be combined with each other to form new technical solutions.

In the embodiments of this application, unless otherwise stated, all the technical features and optional technical features of this application can be combined with each other to form new technical solutions.

In the related art, batteries are widely used in many fields such as electric transportation tools including electric bicycles, electric motorcycles, and electric cars, as well as military equipment and aerospace. Batteries can be roughly classified into pouch batteries and hard-shell batteries according to the hardness of their shells. Pouch batteries have the advantages of a relatively large mass/volume energy density and good safety, which makes their applications increasingly widespread. During the charge and discharge states of a pouch battery, the pouch battery inevitably generates heat. If the temperature of the pouch battery is high, the working performance of the pouch battery will be affected.

For example, after thermal runaway occurs in a pouch cell, due to the poor thermal conductivity of the pouch cell itself, two adjacent pouch cells are in contact with each other. This makes it difficult for the heat generated by the pouch cell experiencing thermal runaway to be dissipated quickly, thus causing the temperature of the adjacent pouch cells to rise rapidly and increasing the risk of thermal runaway.

To this end, this application provides a battery apparatus. The battery apparatus includes a plurality of pouch cells and a heat dissipation member. The plurality of pouch cells are arranged along a first direction; and the heat dissipation member is disposed between two adjacent pouch cells.

In the battery apparatus of the foregoing embodiment, the heat dissipation member is disposed between two adjacent pouch cells. The heat dissipation member can quickly transfer and dissipate the heat of the pouch cells to the surrounding environment, thereby reducing the temperature rise of the pouch cells and improving the working performance of the pouch cells.

An embodiment of this application provides an electric device that uses a battery apparatus as its power source. The electric device may be, but is not limited to, a mobile phone, a tablet, a laptop computer, an electric toy, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

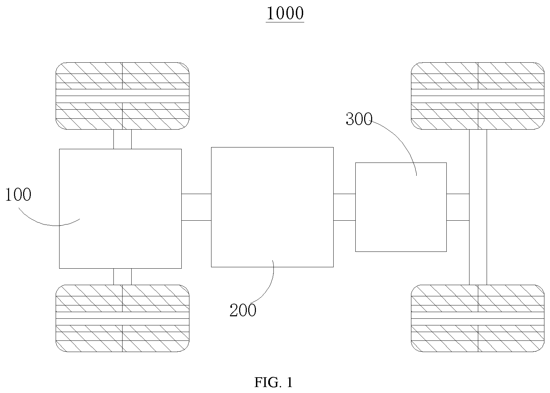

Referring to FIG. 1, the vehicle 1000 may be a new energy vehicle. The new energy vehicle may be a battery electric vehicle, a hybrid electric vehicle, a range-extended electric vehicle, or the like. Furthermore, the vehicle 1000 may be a commercial vehicle. The vehicle 1000 is provided with a battery apparatus 100 inside, where the battery apparatus 100 may be arranged at the bottom, front, or rear of the vehicle 1000. The battery apparatus 100 may be configured to supply power to the vehicle 1000. For example, the battery apparatus 100 may be used as an operational power source for the vehicle 1000. The vehicle 1000 may further include a controller 200 and a motor 300, where the controller 200 is configured to control the battery apparatus 100 to supply power to the motor 300, for example, to satisfy power needs of start, navigation, and driving of the vehicle 1000.

In some embodiments of this application, the battery apparatus 100 can be used as not only the operational power supply for the vehicle 1000 but also a driving power supply for the vehicle 1000, replacing all or part of the fossil fuel or the natural gas to provide driving power for the vehicle 1000.

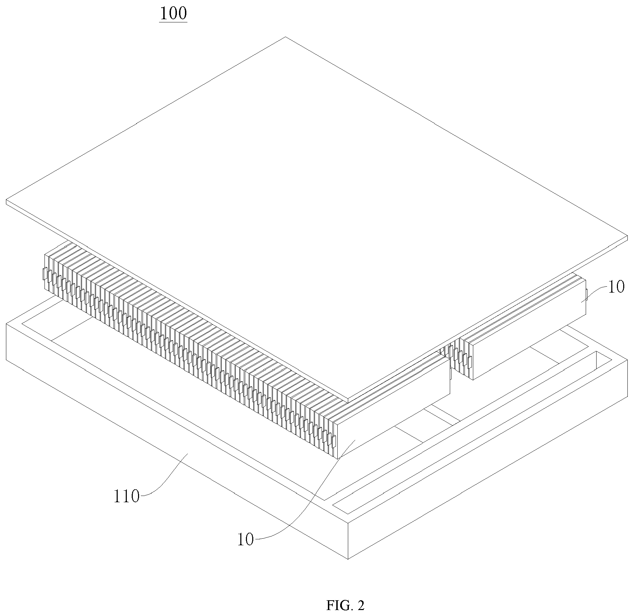

Referring to FIG. 2, in an embodiment of this application, the battery apparatus (Battery Apparatus) 100 may include one or more battery cell assemblies for providing voltage and capacity. The battery cell assembly (Battery Cell Assembly) may include a plurality of pouch cells 10, and the plurality of pouch cells 10 are connected in series, in parallel, or in a combination of series and parallel through busbar components. For example, the battery cell assembly (Battery Cell Assembly) is typically formed by arranging a plurality of pouch cells 10; and the battery cell assembly may be a battery module (Battery Module), and the battery module is formed by arranging and fixing a plurality of pouch cells 10 to form an independent module. As an example, the battery module may be formed by bundling a plurality of pouch cells 10 with a cable tie.

The battery apparatus 100 may be a battery pack (battery Pack), and the battery pack includes a box 110 and one or more battery cell assemblies, the battery cell assemblies being accommodated in the box 110. The battery cell assembly may be a battery module. The battery cell assembly may be accommodated in the box 110 by fixing the battery module in the box 110; and the battery cell assembly may alternatively be accommodated in the box 110 by directly fixing a plurality of pouch cells 10 in the box 110.

In an embodiment of this application, the box 110 may include a first box and a second box. The first box and the second box are snap-fitted, so that a closed space is formed inside the box 110 to accommodate the battery cell assembly. The "closed" herein means covered or closed, and may be sealed or unsealed. The first box may be a top cover or a bottom plate. For example, the box 110 may include a top cover, a frame, and a bottom plate. The top cover and the bottom plate are separately connected to the frame, so that a closed space is formed inside the box 110 to accommodate the battery cell assembly.

In an embodiment of this application, the box 110 may serve as part of the chassis structure of the vehicle 1000. For example, part of the box 110 may become at least part of the chassis of a vehicle 1000, or part of the box 110 may become at least parts of a cross beam and longitudinal beam of a vehicle.

In an embodiment of this application, the pouch cell 10 may be a secondary battery. The secondary battery refers to the pouch cell 10 in which the active material can be activated by charging after the pouch cell 10 is discharged and then can be used continuously; and the pouch cell 10 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of this application. The battery cell 10 may be flat, cuboid, or in other shapes. This is not limited in the embodiments of this application either.

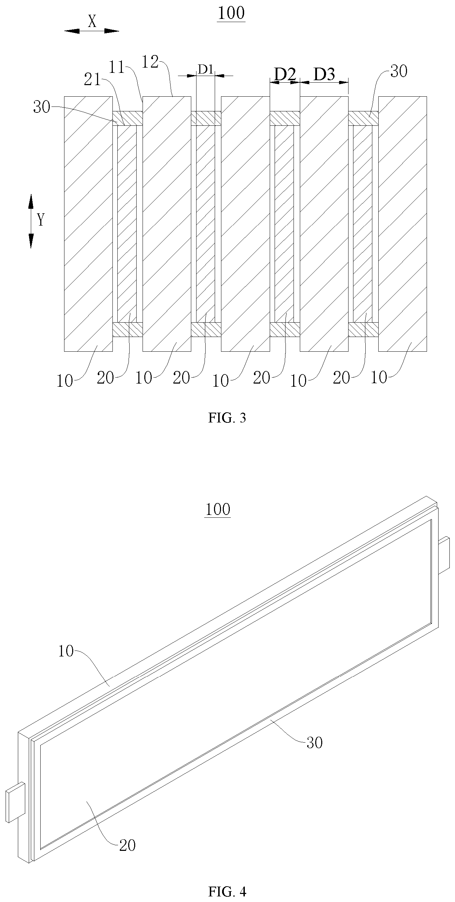

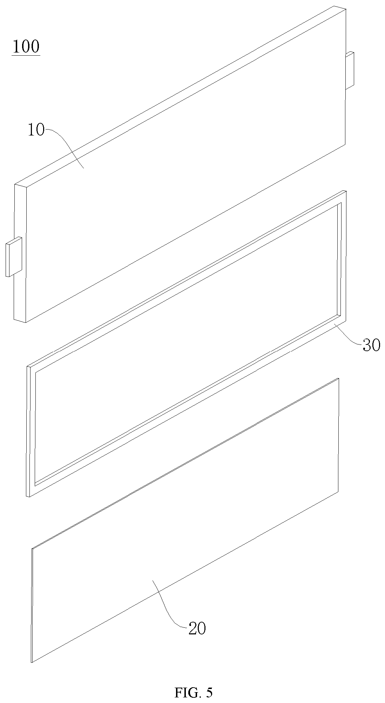

Referring to FIG. 3 to FIG. 5, the battery apparatus 100 of the embodiments of this application includes a plurality of pouch cells 10 and a heat dissipation member 20. The plurality of pouch cells 10 are arranged along a first direction X, and the heat dissipation member 20 is disposed between two adjacent pouch cells 10.

Specifically, the pouch cell 10 may have a flexible shell. The flexible shell of the pouch cell 10 has good flexibility, and the flexible shell can be formed into a bag shape. An electrode assembly of the pouch cell 10 is accommodated in the flexible shell, so that the pouch cell 10 is a pouch battery. For example, the flexible shell may be an aluminum-plastic film.

The electrode assembly of the pouch cell 10 may be a wound electrode assembly or may be a laminated electrode assembly. The electrode assembly may include electrode plates and tabs. The electrode assembly may be formed by winding the electrode plat, and the electrode assembly may alternatively be formed by stacking the electrode plates.

The plurality of pouch cells 10 may be cells with consistent parameters such as size and shape, or the parameters of at least two pouch cells 10 may be inconsistent. The first direction X may be a horizontal direction of the battery apparatus 100 in the normal use state.

The heat dissipation member 20 has good thermal conductivity, and the thermal conductivity of the heat dissipation member 20 is better than the thermal conductivity of the pouch cell 10. The heat generated by the pouch cells 10 can be transferred to the heat dissipation member 20, and the heat dissipation member 20 then transfers the heat to the surrounding environment. The "surrounding environment" referred to herein may be substances in the pouch cell 10 and the atmosphere that can exchange heat with the heat dissipation member 20.

It should be noted that the heat dissipation member 20 may be provided in one or plurality. Under the condition that the heat dissipation member 20 is provided in plurality, the heat dissipation member 20 may be disposed between any two adjacent pouch cells 10, or the heat dissipation member 20 may be disposed between some two adjacent pouch cells 10.

Therefore, in the battery apparatus 100 of the foregoing embodiment, the heat dissipation member 20 is disposed between two adjacent pouch cells 10, and the heat dissipation member 20 can quickly transfer and dissipate the heat of the pouch cells 10 to the surrounding environment, thereby reducing the temperature rise of the pouch cells 10 and improving the working performance of the pouch cells 10.

For example, among the plurality of pouch cells 10, if one of the pouch cells 10 experiences thermal runaway and generates a large amount of heat, the heat dissipation member 20 close to the pouch cell experiencing thermal runaway can evenly transfer the heat to other pouch cells 10, reducing the risk of thermal runaway of another pouch cell 10 adjacent to the pouch cell 10 experiencing thermal runaway.

Referring to FIG. 3, in some embodiments of this application, the pouch cell 10 includes a first outer surface 11, where the first outer surface 11 is a largest surface of the pouch cell 10, the first outer surfaces 11 of the plurality of pouch cells 10 are arranged along the first direction X, and the heat dissipation member 20 is disposed between the first outer surfaces 11 of two adjacent pouch cells 10.

Specifically, the pouch cell 10 may be flat, and the pouch cell 10 may further include a second outer surface 12 connected to the first outer surface 11, and an area of the second outer surface 12 is smaller than an area of the first outer surface 11. The first outer surface 11 is substantially perpendicular to the first direction X. For example, an included angle between a normal direction of the first outer surface 11 and the first direction X may be less than 30°.

It can be understood that when the first outer surface 11 of the pouch cell 10 is the largest surface, most of the heat generated by the pouch cell 10 is also dissipated through the first outer surface 11 of the pouch cell 10, and the heat of the pouch cell 10 mainly concentrates on the first outer surface 11. Therefore, the heat dissipation member 20 is disposed between the first outer surfaces 11 of two adjacent pouch cells 10, which makes the heat transfer efficiency between the heat dissipation member 20 and the pouch cell 10 higher and can reduce the temperature rise of the pouch battery more quickly.

Referring to FIG. 3, in some embodiments of this application, a projection of the heat dissipation member 20 in the first direction X falls within the first outer surface 11 of the pouch cell 10. In other words, the outer contour of the first outer surface 11 can surround the outer contour of the projection of the heat dissipation member 20 in the first direction X. For example, the outer contour of the first outer surface 11 may be a first square, the outer contour of the projection of the heat dissipation member 20 in the first direction X may be a second square, and the first direction X falls within the second square.

Therefore, the heat dissipation member 20 retracts relative to the contour of the pouch cell 10, does not protrude from the pouch cell 10, has a low probability of interference with surrounding components, and also makes the pouch cell 10 occupy a relatively large space of the entire battery apparatus 100.

In this way, in the foregoing technical solution, a size of the heat dissipation member 20 is smaller than a size of the pouch cell 10. Under the condition that the heat dissipation member 20 meets the requirement of heat transfer, the heat dissipation member 20 occupies a relatively small space of the battery apparatus 100, which increases the energy density of the battery apparatus 100.

In some embodiments of this application, a surface of the heat dissipation member 20 facing the pouch cell 10 is a plane.

In the foregoing technical solution, the surface of the heat dissipation member 20 facing the pouch cell 10 is a plane, so that when the heat dissipation member 20 is in contact with the pouch battery, a contact area between the heat dissipation member 20 and the pouch battery can be increased, and the heat transfer efficiency between the heat dissipation member 20 and the pouch battery can be improved. In addition, the heat dissipation member 20 is also easy to be manufactured, which can reduce the manufacturing cost of the heat dissipation member 20.

Referring to FIG. 3, in some embodiments of this application, the heat dissipation member 20 is spaced apart from the pouch cell 10. In other words, there is a gap between the heat dissipation member 20 and the pouch cell 10. It should be noted that the gap between the heat dissipation member 20 and the pouch cell 10 is formed when the pouch cell 10 has no swelling deformation or has a low degree of deformation. When the pouch cell 10 has a large degree of swelling deformation, the pouch cell 10 can be in contact with the heat dissipation member 20.

In the foregoing technical solution, since the pouch cell 10 inevitably undergoes swelling deformation during use, the heat dissipation member 20 is spaced apart from the pouch cell 10, which can provide a certain space for the swelling deformation of the pouch cell 10, reduce the stress of the pouch cell 10, and improve the working performance of the pouch cell 10.

In some embodiments of this application, the heat dissipation member 20 is a solid structure. In other words, there are no structures such as holes inside the heat dissipation member 20, so that the thermal conductivity of each part of the heat dissipation member 20 is basically the same. Therefore, in the foregoing technical solution, the solid heat dissipation member 20 has a high heat conduction efficiency, which can improve the efficiency of the heat dissipation member 20 in transferring heat to the surrounding environment.

Referring to FIG. 3, in some embodiments of this application, the heat dissipation member 20 is a plate-shaped member with uniform thickness, and a thickness direction of the heat dissipation member 20 is the same as the first direction X. In other words, along the first direction X, the thickness of the heat dissipation member 20 is uniform everywhere.

In the foregoing technical solution, the plate-shaped heat dissipation member 20 with uniform thickness makes the heat conduction efficiency at all positions of the heat dissipation member 20 approximately the same, which can improve the consistency of heat transfer of the heat dissipation member 20.

In some embodiments of this application, the heat dissipation member 20 is a metal member. For example, the heat dissipation member 20 may be made of one of aluminum, steel, and copper. In the foregoing technical solution, the heat dissipation member 20 made of metal has good thermal conductivity, which can improve the thermal conductivity efficiency of the heat dissipation member 20. In addition, the heat dissipation member 20 has high strength, and can support the pouch cell 10 when the pouch cell 10 is impacted, which reduces the degree of deformation of the pouch cell 10, and improves the stability of the pouch cell 10 during use.

Referring to FIG. 3, in some embodiments of this application, a thickness of the heat dissipation member 20 is D1, where 0.2 mm ≤D1≤2 mm. For example, the thickness D1 of the heat dissipation member 20 may be 0.2 mm, 0.3 mm, 0.8 mm, 1.5 mm, 2 mm, or the like.

In the foregoing technical solution, the thickness D1 of the heat dissipation member 20 is greater than or equal to 0.2 mm, making the heat dissipation member 20 easy to be manufactured. In addition, the thickness of the heat dissipation member 20 is less than or equal to 2 mm, making the volume of the heat dissipation member 20 appropriate and the space occupied by the heat dissipation member 20 relatively small, which can increase the energy density of the battery apparatus 100 and provide a high thermal conductivity efficiency.

Referring to FIG. 3 to FIG. 5, in some embodiments of this application, the battery apparatus 100 includes a support member 30. The support member 30 is disposed at an edge of the heat dissipation member 20, and the support member 30 abuts against the pouch cell 10. Specifically, the support member 30 may be disposed at one of edges of the heat dissipation member 20, or may be disposed at all edges of the heat dissipation member 20. The support member 30 connects two adjacent pouch cells 10, so that the adjacent pouch cells 10 will not move relative to each other.

In the foregoing technical solution, the support member 30 can provide support for the pouch cell 10 and improve the position stability of the pouch cell 10.

In some embodiments of this application, the support member 30 surrounds the heat dissipation member 20. Specifically, the support member 30 may be in a frame shape, the support member 30 extends along a circumferential direction of the heat dissipation member 20, and the support member 30 is connected to all edge positions of the support member 30.

In the foregoing technical solution, the support member 30 can limit the position of the heat dissipation member 20, so as to improve the position stability of the heat dissipation member 20 and thus improve the heat dissipation effect of the heat dissipation member 20 on the pouch cell 10. In addition, the support member 30 has more abutment positions with the pouch cell 10, which improves the supporting effect of the support member 30 on the pouch cell 10.

Referring to FIG. 3 to FIG. 5, in some embodiments of this application, an outer contour area of the support member 30 is smaller than an area of the first outer surface 11 of the pouch cell 10.

Specifically, the outer contour area of the support member 30 is an area enclosed by the outer contour of the projection formed by the support member 30 along the first direction X. The outer contour area of the support member 30 is smaller than the area of the first outer surface 11 of the pouch cell 10. In other words, the projection of the support member 30 on the first outer surface 11 along the first direction X is located within the first outer surface 11. For example, the support member 30 has four outer edges, and at least one outer surface retracts relative to the outer edge of the pouch cell 10.

In the foregoing technical solution, the outer contour area of the support member 30 is less than the area of the first outer surface 11 of the pouch cell 10. Under the condition that the support member 30 can support the pouch cell 10, the support member 30 occupies a relatively small space of the battery apparatus 100, which increases the energy density of the battery apparatus 100.

Referring to FIG. 3 to FIG. 5, in some embodiments of this application, the support member 30 is bonded to a side surface 21 of the heat dissipation member 20. In other words, the support member 30 and the heat dissipation member 20 are connected to form an integral structure. For example, the support member 30 and the heat dissipation member 20 may be bonded together through processes such as adhesive bonding, fitting connection, and in-mold injection molding. The side surface 21 of the heat dissipation member 20 is a surface of the heat dissipation member 20 parallel to the first direction X.

In the foregoing technical solution, the support member 30 is bonded to the side surface 21 of the heat dissipation member 20, which not only enables the support member 30 and the heat dissipation member 20 to form an integral structure, facilitates reducing the number of components during the assembly process of the battery apparatus 100, and improves the assembly efficiency of the battery apparatus 100, but also enables the heat dissipation member 20 to maintain a stable position under the connection of the support member 30, and improves the heat dissipation effect of the heat dissipation member 20 on the pouch cell 10.

Referring to FIG. 3, in some embodiments of this application, along the first direction X, a thickness of the support member 30 is greater than a thickness of the heat dissipation member 20. Thus, since the support member 30 is disposed at the edge of the heat dissipation member 20, when the thickness of the support member 30 is greater than the thickness of the heat dissipation member 20, at least one side of the support member 30 along the first direction X protrudes from the heat dissipation member 20 and abuts against the pouch cell 10. Thus, in the foregoing technical solution, the support member 30 makes at least one surface of the heat dissipation member 20 spaced apart from the corresponding pouch cell 10, providing a space for the swelling deformation of the pouch cell 10.

Referring to FIG. 3, in some embodiments of this application, along the first direction X, a ratio of the support member 30 to the pouch cell 10 in thickness is lower than 10%. For example, if the thickness of the support member 30 is D2 and the thickness of the pouch cell 10 is D3, D2/D3<10%. For example, the value of D2/D3 may be 1%, 2%, 5%, 6%, 9%, or the like.

In the foregoing technical solution, the ratio of the support member 30 to the pouch cell 10 in thickness is relatively small. That is to say, the support member 30 occupies a relatively small space, while the pouch cell 10 occupies a larger space, which can increase the energy density of the battery apparatus 100.

In some embodiments of this application, the support member 30 is made of polypropylene-based material. The polypropylene-based material is a type of polymer material polymerized from propylene monomers, mainly including homopolymer polypropylene, copolymer polypropylene, and the like.

In the foregoing technical solution, the support member 30 has good insulation performance, which can improve the stability of the battery apparatus 100. In addition, the support member 30 has relatively stable chemical properties, which can extend the service life of the battery apparatus 100.

In some embodiments of this application, the support member 30 is a deformable elastic member. In other words, the support member 30 can undergo elastic deformation when the support member 30 is subjected to external force. As mentioned above, the support member 30 may be made of polypropylene-based material, which makes the support member 30 have a certain degree of elasticity.

In the foregoing technical solution, the support member 30 may be deformed. During the swelling and deformation process of the pouch cell 10, this can reduce the stress of the pouch cell 10 and improve the stability of the pouch cell 10 during use.

In an example, under the condition that the support member 30 is subjected to a pressure of 0.9 Mpa, the support member 30 can be compressed by 80%. In other words, under the condition that the support member 30 is under a pressure of 0.9 Mpa, the thickness of the support member 30 is 20% of its original thickness before being subjected to pressurized.

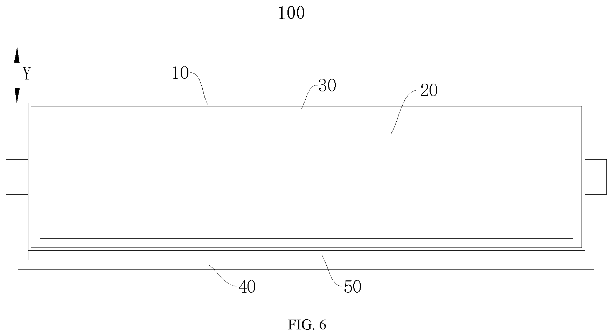

Referring to FIG. 6, in some embodiments of this application, the battery apparatus 100 includes a water cooling plate 40, where the pouch cell 10 is thermally connected to the water cooling plate 40. Specifically, the pouch cell 10 may be in direct contact with the water cooling plate 40 or may be indirectly connected to the water cooling plate 40. The water cooling plate 40 may be disposed on one side of the pouch cell 10 along the second direction Y. A flowing heat conducting liquid may be introduced into the water cooling plate 40. During the flow process, the heat conducting liquid can exchange heat with the pouch cell 10, thereby adjusting the temperature of the pouch cell 10. In the foregoing technical solution, the water cooling plate 40 can cool the pouch cell 10 and reduce the temperature rise of the pouch cell 10.

Referring to FIG. 6, in some embodiments of this application, the pouch cell 10 leans against the water cooling plate 40 along the second direction Y, and the first direction X intersects with the second direction Y. For example, the second direction Y is perpendicular to the first direction X. Under the condition that the battery apparatus 100 is in normal use, the second direction Y may be a vertical direction, and the water cooling plate 40 may be disposed at the bottom of the pouch cell 10.

In the foregoing technical solution, the pouch cell 10 leans against the water cooling plate 40, making a distance between the pouch cell 10 and the water cooling plate 40 relatively short. This can improve the heat exchange efficiency between the pouch cell 10 and the water cooling plate 40, and thus can quickly reduce the temperature rise of the pouch cell 10.

Referring to FIG. 6, in some embodiments of this application, a heat conducting member 50 is disposed between the water cooling plate 40 and the pouch cell 10, and the heat conducting member 50 connects the pouch cell 10 and the water cooling plate 40. Specifically, the heat conducting member 50 may be a heat conducting adhesive such as a heat conducting silicone gel or an epoxy heat conducting adhesive.

In the foregoing technical solution, the heat conducting member 50 can improve the heat exchange efficiency between the water cooling plate 40 and the pouch cell 10, which is beneficial for the water cooling plate 40 to cool the pouch cell 10.

In some embodiments of this application, optionally, the pouch cell 10 is any one of a lithium iron phosphate battery cell, a ternary battery cell, and a solid-state battery cell.

The solid-state battery cell may include but is not limited to polymer solid-state battery cell, oxide solid-state battery cell, sulfide solid-state battery cell, halide solid-state battery cell, or the like. The solid-state battery cell may alternatively be a semi-solid-state battery cell or an all-solid-state battery cell.

In the foregoing technical solution, using the above-mentioned types of pouch cells 10 can provide more options for the design of the battery apparatus to meet different usage requirements. The pouch cell 10 being a lithium iron phosphate battery cell has advantages of high reliability, long cycle life, light weight, large capacity, and low internal resistance. The pouch cell 10 being a ternary battery cell has advantages of high energy density and good electrochemical performance. The pouch cell 10 being a solid-state battery cell has advantages of high energy density, high reliability, light weight, and good performance in high and low temperatures.

In some embodiments of this application, optionally, the pouch cell 10 is a lithium iron phosphate battery cell, and in a positive electrode material of the pouch cell 10, a ratio of a positive electrode active material, a binder, and a conductive agent is 96:(1-3):(1-3); or the pouch cell 10 is a ternary battery cell, and in a positive electrode material of the pouch cell 10, a ratio of a positive electrode active material, a binder, and a conductive agent is 96:(2-3):(1-2).

In some embodiments, a positive electrode of the pouch cell 10 may be a positive electrode plate, the positive electrode plate may include a positive electrode current collector and a positive electrode film layer disposed on at least one surface of the positive electrode current collector, and the positive electrode film layer includes a positive electrode active material.

In an example, the positive electrode current collector includes two back-to-back surfaces along a thickness direction of the positive electrode current collector, and the positive electrode film layer is arranged on either or both of the two back-to-back surfaces of the positive electrode current collector.

In an example, the positive electrode current collector may be a metal foil or a composite current collector. For example, as the metal foil, the positive electrode current collector may use stainless steel, copper, aluminum, nickel, baked carbon electrode, carbon, nickel, titanium, and silver surface-treated aluminum or stainless steel. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, when the pouch cell 10 in the embodiments of this application is a lithium-ion battery, the positive electrode active material may include at least one of the following materials: phosphates, layered transition metal oxides, and their respective modified compounds. Optionally, the positive electrode active material may include layered transition metal oxides and their respective modified compounds, which is beneficial for increasing the energy density of the pouch cell 10. However, this application is not limited to such materials, and may alternatively use other conventional well-known materials that can be used as positive electrode film layers for batteries. One of these positive electrode active materials may be used alone, or two or more of them may be used in combination.

Examples of the phosphates may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

Layered transition metal oxides include at least one of compounds with the general formula LiₐNi_{b}Co_{c}M_{d}OₑA_{f} and their modified compounds, where 0.8≤a≤1.2, 0.3≤b<1, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl, optionally, 0.5≤b<1, and further optionally, 0.75≤b≤0.98.

Examples of the layered transition metal oxides may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), LiNi_{0.8}Co_{0.1}Mn_{0.1}O₂ (NCM₈₁₁ for short)), LiNi_{0.9}Co_{0.05}Mn_{0.05}O₂ (Ni90 for short), lithium nickel cobalt aluminum oxide (for example, LiNi_{0.80}Co_{0.15}Al_{0.05}O₂), and their modified compounds thereof.

When the pouch cell 10 in the embodiments of this application is a sodium-ion battery, the positive electrode active material may include but is not limited to at least one of sodium-containing transition metal oxide, a poly-anionic material (for example, phosphate, fluorophosphate, pyrophosphate, and sulfate), and a Prussian blue-type material.

For example, the positive electrode active material for sodium-ion batteries may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0<p≤4, 0<q≤2, 1≤r≤3, 0≤x≤2, X is at least one of H+, Li+, Na+, K+, and NH4+, M' is a transition metal cation and optionally at least one of V, Ti, Mn, Fe, Co, Ni, Cu, and Zn, and Y is a halogen anion and optionally at least one of F, Cl, and Br.

In the embodiments of this application, the modified compounds of the above-mentioned positive electrode active materials may be obtained by doping modification and/or surface coating modification of the positive electrode active materials, such as carbon coating modification and fast ion conductor coating modification.

During the charge and discharge of the pouch cell 10, active ions such as Li are intercalated, deintercalated, and consumed. The molar content of Li in the pouch cell 10 is different when the pouch cell 10 is discharged to different states. In the embodiments of this application, regarding the examples of the positive electrode active material, the molar content of Li refers to the initial state of the material, that is, before feeding of materials. When a positive electrode active material is applied in a battery system, the molar content of Li may change after charge-discharge cycles.

In the embodiments of this application, regarding the examples of the positive electrode active material, the molar content of oxygen O is only a theoretical state value. The release of oxygen from the crystal lattice causes a change in the molar content of oxygen O. In reality, the molar content of oxygen O fluctuates.

In the embodiments of this application, the content of elements in the positive electrode active material has the meaning well-known in the art and can be detected using equipment and methods well-known in the art. For example, referring to EPA 6010D-2014, the test can be carried out by inductively coupled plasma atomic emission spectrometry, and the determination can be performed using plasma atomic emission (ICP-OES, instrument model: Thermo ICAP7400). 0.4 g of positive electrode active material is weighed first, into which 10 ml of aqua regia (50% concentration) is added. Then the resulting product is placed on a 180°C flat plate for 30 mins. After digestion on the flat plate, the solution volume is adjusted to 100 mL, and quantitative testing is performed using the standard curve method.

In some embodiments, a foamed metal may be used as the positive electrode. The foamed metal may be foamed nickel, foamed copper, foamed aluminum, foamed alloy, foamed carbon, and the like. When the foam metal is used as the positive electrode, a surface of the foamed metal may not have a positive electrode film layer disposed, or may have a positive electrode film layer disposed. In an example, the foamed metal may also be filled and/or deposited with a lithium source material, potassium metal, or sodium metal, where the lithium source material may be a lithium metal and/or lithium-rich material.

In some embodiments, the positive electrode film layer further optionally includes a positive electrode conductive agent. The positive electrode conductive agent is not limited to any particular type in the embodiments of this application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments, a mass percentage of the positive electrode conductive agent in the positive electrode film layer is ≤5wt%.

In some embodiments, the positive electrode film layer further optionally includes a positive electrode binder. The positive electrode binder is not limited to any particular type in the embodiments of this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, a mass percentage of the positive electrode binder in the positive electrode film layer is ≤5wt%.

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

In some embodiments, the negative electrode may be a negative electrode plate, the negative electrode plate may include a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In an example, the negative electrode current collector may be a metal foil, a foam metal, or a composite current collector. For example, as the metal foil, the negative electrode current collector may use silver surface-treated aluminum or stainless steel, stainless steel, copper, aluminum, nickel, baked carbon, carbon, nickel, or titanium. The foamed metal may be foamed nickel, foamed copper, foamed aluminum, foamed alloy, foamed carbon, and the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode active material may be a negative electrode active material for pouch cells 10 well-known in the art. In an example, the negative electrode active material may include at least one of the following materials: a carbon material (for example, the carbon material includes at least one of artificial graphite, natural graphite, soft carbon, and hard carbon), a silicon-based material, a tin-based material, and lithium titanate. The silicon-based material may include at least one of elemental silicon, silicon-oxygen compound, silicon-carbon composite, silicon-nitrogen composite, and silicon alloy. The tin-based material may include at least one of elemental tin, tin-oxygen compound, and tin alloy. However, this application is not limited to such materials, and may alternatively use other conventional well-known materials that can be used as negative electrode film layers for batteries. One of these negative electrode film layers may be used alone, or two or more of them may be used in combination.

In some embodiments, the negative electrode active material includes element silicon, where the element silicon can exist in the form of silicon-based materials. The silicon-based material may include at least one of elemental silicon, silicon-oxygen compound, silicon-carbon composite, silicon-nitrogen composite, and silicon alloy. The introduction of element silicon can increase the energy density of pouch cells 10.

In some embodiments, the mass percentage of the element silicon in the negative electrode film layer is from 1wt% to 32wt%, optionally from 2wt% to 19wt%, and further optionally, from 6wt% to 13wt%. In the pouch cell 10 system, when the mass percentage of the element silicon falls within the foregoing range, the energy density of the pouch cell 10 can be increased.

In the embodiments of this application, the mass percentage of element silicon in the negative electrode film layer has the meaning well-known in the art and can be detected using equipment and methods well-known in the art. For example, the negative electrode plate is soaked in a solvent such as water to separate the negative electrode active material from the negative electrode current collector. Then, the negative electrode active material can be obtained through suction filtration. Determination is performed for the negative electrode active material using an inductively coupled plasma-optical emission spectrometer of model ICAP7400 from Thermo Fisher Scientific in the United States and in accordance with the standard GB/T 30902-2014, to obtain the content of element silicon.

In some embodiments, the negative electrode film layer further optionally includes a negative electrode conductive agent. The negative electrode conductive agent is not limited to any particular type in the embodiments of this application. For example, the negative electrode conductive agent may include at least one of superconducting carbon, conductive graphite, acetylene black, carbon black, Ketjen black, carbon dots, carbon nanotubes, graphene, and carbon nanofiber. In some embodiments, a mass percentage of the negative electrode conductive agent in the negative electrode film layer is ≤5wt%.

In some embodiments, the negative electrode film layer further optionally includes a negative electrode binder. The negative electrode binder is not limited to any particular type in the embodiments of this application. In an example, the negative electrode binder may include at least one of styrene-butadiene rubber (SBR), water soluble unsaturated resin SR-1B, water-based acrylic resin (for example, polyacrylic acid PAA), polymethacrylic acid PMAA, polyacrylic acid sodium PAAS), polyacrylamide (PAM), polyvinyl alcohol (PVA), sodium alginate (SA), and carboxymethyl chitosan (CMCS). In some embodiments, a mass percentage of the negative electrode binder in the negative electrode film layer is ≤5%.

In some embodiments, the negative electrode film layer further optionally includes another additive. For example, the another additive may include a thickener, for example, sodium carboxymethyl cellulose (CMC-Na) or PTC thermistor material. In some embodiments, a mass percent of another additive in the negative electrode film layer is ≤2wt%.

In some embodiments, the material of the positive electrode current collector may be aluminum, and the material of the negative electrode current collector may be copper.

In some embodiments, a separator element includes a separator. The separator is not limited to any particular type in this application and may be any well-known porous separator with good chemical stability and mechanical stability.

The separator is not limited to any particular type in the embodiments of this application and may be any well-known porous separator with good chemical stability and mechanical stability.

In some embodiments, the material of the separator may include one or more of glass fiber, non-woven fabric, polyethylene, polypropylene, and polyvinylidene fluoride. The separator may be a single-layer film or may be a multi-layer composite film and is not particularly limited. When the separator is a multi-layer composite film, all layers may be made of the same or different materials, which is not particularly limited.

In some embodiments, the separator may include a porous base film and a coating disposed on at least one side of the porous base film, where the coating may include at least one of inorganic particles and organic particles.

The porous base film may include one or more of polyethylene and polypropylene.

The inorganic particles have good heat resistance performance, which can improve the overall heat resistance performance of the separator. The inorganic particles, within the operating voltage range of sodium-ion batteries, hardly undergo oxidation and reduction reactions with metal dendrites at all. In other words, the inorganic particles are configured not to undergo oxidation or reduction reactions with alkali metals and/or alkaline earth metals under the nominal voltage of sodium-ion batteries.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO2, strontium titanate SrTiO3, barium titanate BaTiO₃, and magnesium fluoride MgF₂.

In some embodiments, the organic particles include at least one of polystyrene, polyethylene, polyimide, melamine resin, phenolic resin, polypropylene, polyester (for example, polyethylene terephthalate, polyethylene naphthalate, polybutylene terephthalate), polyphenylene sulfide, polyaramid, polyamideimide, polyimide, copolymer of butyl acrylate and ethyl methacrylate, and a combination thereof.

In some embodiments, the pouch cell 10 further includes an electrolyte.

During charge and discharge of the battery cell, active ions are intercalated and deintercalated between the positive electrode plate and the negative electrode plate, and the electrolyte conducts the active ions between the positive electrode plate and the negative electrode plate. The electrolyte is not specifically limited to any particular type in the embodiments of this application, and may be selected depending on actual needs.

The electrolyte includes an electrolytic salt and a solvent. The electrolytic salt and the solvent are not limited to any specific types, and may be selected based on actual needs.

In some embodiments, the electrolyte further optionally includes an additive. For example, the additive may include a negative electrode film-forming additive, or may include a positive electrode film-forming additive, or may include an additive that can improve some performance of a battery, for example, an additive for improving overcharge performance of the battery, an additive for improving high-temperature performance of the battery, and an additive for improving low-temperature power performance of the battery.

For example, the additive includes at least one of cyclic carbonate compound containing unsaturated bonds, sulfate compound, sulfite compound, sultone compound, disulfonic compound, nitrile compound, aromatic compound, isocyanate compound, phosphonitrile compound, anhydride, cyclic anhydride compound, phosphite ester compound, phosphate ester compound, borate, and carboxylic ester compound.

It can be understood that when the pouch cell 10 is a lithium iron phosphate battery cell, in a positive electrode material of the pouch cell 10, a positive electrode active material accounts for 96 parts of the total weight of the positive electrode material, a binder accounts for 1 part to 3 parts of the total weight of the positive electrode material (for example, the value may include but is not limited to 1, 1.2, 1.5, 1.8, 2, 2.2, 2.5, 2.8, or 3), and a conductive agent accounts for 1 part to 3 parts of the total weight of the positive electrode material (for example, the value may include but is not limited to 1, 1.2, 1.5, 1.8, 2, 2.2, 2.5, 2.8, or 3).

For example, when the pouch cell 10 is a lithium iron phosphate battery cell, a positive electrode active material is LFP (which may refer to LiFePO4, that is, lithium iron phosphate), a binder may be PVDF (polyvinylidene fluoride), and a conductive agent may be conductive carbon black, where the ratio LFP:PVDF:conductive carbon black may be 96:2:2, meaning a total weight of the positive electrode active material is divided into 100 parts, with LFP accounting for 96 parts, PVDF accounting for 2 parts, and conductive carbon black accounting for 2 parts. The unit of weight for the positive electrode active material may be gram.

When the pouch cell 10 is a ternary battery cell, in a positive electrode material of the pouch cell 10, a positive electrode active material accounts for 96 parts of the total weight of the positive electrode material, a binder accounts for 2 parts to 3 parts of the total weight of the positive electrode material (for example, the value may include but is not limited to 2, 2.2, 2.5, 2.8, or 3), and a conductive agent accounts for 1 part to 2 parts of the total weight of the positive electrode material (for example, the value may include but is not limited to 1, 1.2, 1.5, 1.8, or 2). The ternary battery cell can include but is not limited to lithium nickel cobalt manganese systems, lithium nickel cobalt aluminum systems, etc.

For example, the ternary material of the ternary battery cell may be eighth-based LiNi_{0.8}Co_{0.1}Mn_{0.1}O₂, where a ratio of weight parts of the positive electrode active material, binder, and conductive agent is 96:2.5:1.5, meaning a total weight of the positive electrode material is divided into 100 parts, with eighth-based LiNi_{0.8}Co_{0.1}Mn_{0.1}O₂ accounting for 96 parts, the binder accounting for 2.5 parts, and the conductive agent accounting for 1.5 parts.

In the foregoing technical solution, when the pouch cell 10 is a lithium iron phosphate battery cell, a high proportion of the positive electrode active material means that more substances capable of undergoing an electrochemical reaction can be accommodated within a limited electrode assembly. This is conducive to increasing the capacity and energy density of the battery apparatus 100, enabling the lithium iron phosphate battery cell to output a higher amount of electricity when its volume and weight are relatively small, and meeting the application scenarios with certain requirements for energy density. Using the above-mentioned ranges for the amounts of the binder and the conductive agent can reduce the cost of auxiliary materials, thereby reducing the overall cost of the battery apparatus 100. When the pouch cell 10 is a ternary battery cell, due to the relatively complex structure and surface properties of the ternary material, using the above-stated proportions of the positive electrode active material, binder, and conductive agent helps ensure good adhesion between particles of the positive electrode active material and between the active material and the current collector. This consequently improves the mechanical stability and integrity of the electrode assembly, reduces the risk of detachment of the active material and pulverization of electrodes during charge and discharge, and extends the cycle life of the battery apparatus 100.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. However, these modifications or replacements do not make the essence of the corresponding technical solutions deviate from the scope of the technical solutions of the embodiments of this application, and they should all be included in the scope of the claims and description of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery apparatus, wherein the battery apparatus comprises:
a plurality of pouch cells, the plurality of pouch cells being arranged along a first direction; and
a heat dissipation member, the heat dissipation member being disposed between two adjacent pouch cells.

2. The battery apparatus according to claim 1, wherein the pouch cell comprises a first outer surface, the first outer surface being a largest surface of the pouch cell, the first outer surfaces of the plurality of pouch cells being arranged along the first direction, and the heat dissipation member being disposed between the first outer surfaces of two adjacent pouch cells.

3. The battery apparatus according to claim 2, wherein a projection of the heat dissipation member in the first direction falls within the first outer surface of the pouch cell.

4. The battery apparatus according to claim 2 or 3, wherein a surface of the heat dissipation member facing the pouch cell is a plane.

5. The battery apparatus according to any one of claims 1 to 4, wherein the heat dissipation member is spaced apart from the pouch cell.

6. The battery apparatus according to any one of claims 1 to 5, wherein the heat dissipation member is a solid structure.

7. The battery apparatus according to any one of claims 1 to 6, wherein the heat dissipation member is a plate-shaped member with uniform thickness, and a thickness direction of the heat dissipation member is the same as the first direction.

8. The battery apparatus according to any one of claims 1 to 7, wherein the heat dissipation member is a metal member.

9. The battery apparatus according to any one of claims 1 to 8, wherein the thickness of the heat dissipation member is D1, and 0.2 mm≤D1≤2 mm.

10. The battery apparatus according to any one of claims 1 to 9, wherein the battery apparatus comprises a support member, the support member being disposed at an edge of the heat dissipation member, and the support member being abutted against the pouch cell.

11. The battery apparatus according to claim 10, wherein the support member surrounds the heat dissipation member.

12. The battery apparatus according to claim 11, wherein the pouch cell comprises a first outer surface, the first outer surface being the largest surface of the pouch cell, the first outer surfaces of the pouch cells being arranged along the first direction, the heat dissipation member being disposed between the first outer surfaces of two adjacent pouch cells, and an outer contour area of the support member being less than an area of the first outer surface of the pouch cell.

13. The battery apparatus according to any one of claims 10 to 12, wherein the support member is bonded to a side surface of the heat dissipation member.

14. The battery apparatus according to any one of claims 10 to 13, wherein along the first direction, a thickness of the support member is greater than a thickness of the heat dissipation member.

15. The battery apparatus according to any one of claims 10 to 14, wherein along the first direction, a ratio of the support member to the pouch cell in thickness is lower than 10%.

16. The battery apparatus according to any one of claims 10 to 15, wherein the support member is made of polypropylene-based material.

17. The battery apparatus according to any one of claims 10 to 16, wherein the support member is a deformable elastic member.

18. The battery apparatus according to any one of claims 1 to 17, wherein the battery apparatus comprises a water cooling plate, the pouch cell being thermally connected to the water cooling plate.

19. The battery apparatus according to claim 18, wherein the pouch cell is supported on the water cooling plate along a second direction, the first direction intersecting with the second direction.

20. The battery apparatus according to claim 19, wherein a heat conducting member is disposed between the water cooling plate and the pouch cell, and the heat conducting member connects the pouch cell and the water cooling plate.

21. The battery apparatus according to any one of claims 1 to 20, wherein the pouch cell is any one of a lithium iron phosphate battery cell, a ternary battery cell, and a solid-state battery cell.

22. The battery apparatus according to any one of claims 1 to 20, wherein the pouch cell is a lithium iron phosphate battery cell, and in a positive electrode material of the pouch cell, a ratio of a positive electrode active material, a binder, and a conductive agent is 96:(1-3):(1-3); and/or the pouch cell is a ternary battery cell, and in a positive electrode material of the pouch cell, a ratio of a positive electrode active material, a binder, and a conductive agent is 96:(2-3):(1-2).

23. An electric device, wherein the electric device comprises the battery apparatus according to any one of claims 1 to 22.
